Europäisches Patentamt

European Patent Office

Office européen des brevets

(11) Publication number: **0 145 202**
**B1**

## EUROPEAN PATENT SPECIFICATION

(45) Date of publication of patent specification: **27.07.88**

(51) Int. Cl.⁴: **G 06 F 15/20**

(21) Application number: **84307349.5**

(22) Date of filing: **25.10.84**

(54) Word spelling checking system.

(30) Priority: **25.10.83 JP 200259/83**

(43) Date of publication of application:
**19.06.85 Bulletin 85/25**

(45) Publication of the grant of the patent:
**27.07.88 Bulletin 88/30**

(84) Designated Contracting States:
**DE FR GB**

(56) References cited:
**EP-A-0 080 045**
**EP-A-0 083 393**

**COMMUNICATIONS OF THE ACM, vol. 23, no. 12, December 1980, pages 676-687, NEW YORK, (US). J.L. PETERSON: "Computer programs for detecting and correcting spelling errors".**

**PATENTS ABSTRACTS OF JAPAN, vol. 7, no. 6 (P-167) (1151), January 11, 1983**

(73) Proprietor: **SHARP KABUSHIKI KAISHA**
**22-22 Nagaike-cho Abeno-ku**
**Osaka 545 (JP)**

(72) Inventor: **Yoshida, Kunio**
**11-1102 3 ban 2-chome Oomiya-cho**
**Nara-shi Nara-ken (JP)**

(74) Representative: **Wright, Peter David John et al**
**R.G.C. Jenkins & Co. 26 Caxton Street**
**London SW1H 0RJ (GB)**

(56) References cited:
**INFORM. STORAGE AND RETRIEVAL, vol. 10, Numbers 11-12, November/December 1974, pages 371-385, Pergamon Press, OXFORD, (GB). M.A. HAFER et al.: "Word segmentation by letter successor varieties".**

## Description

### WORD SPELLING CHECKING SYSTEM

The present invention relates to a system for checking the spelling of words. The system may be used, for exampe, in a word processor for checking the spelling of entered words.

Conventionally, to check whether the spelling of an entered word is correct or not, a word processor recognizes that if the spelling of the entered word is stored in a memory storing a great number of word spellings, it is established that the spelling is correct. Since the number of the word spellings in a language is vast, it is desired to compress the data of the word spellings to be stored as much as possible.

The article "Computer Programs for Detecting and Correcting Spelling Errors" by J. L. Paterson in Communications of the ACM, Vol 23, No. 12 December 1980, pages 676-687, New York USA, discloses certain proposals for limiting the required dictionary memory capacity in a spelling checking and/or correcting system. One particular proposal is to store in the dictionary memory only root words, omitting the commonly associated prefixes and suffixes (affixes). In the checking procedure, an entered word is first stripped of its affixes and only then checked against the dictionary root spellings.

This document, however makes no reference to the question of compound words, which as used herein means a word which comprises a plurality of juxtaposed basic words, each such basic word having an identifiable meaning. The dictionary memory must store the correct spelling of all the root words, both basic and compound, of which the spelling is to be checked on entry.

In accordance with the present invention, there is provided a system for checking the spelling of words entered into the system wherein the system has a record which includes correct spellings of a set of basic words and excludes a set of compound words each consisting of a plurality of said basic words and checking means for checking an entered word spelling against said basic word spellings in said record in a predetermined sequence so that a said compound word entered into the system is checked by first seeking to identify correspondence between a basic word spelling held in said record and a first portion of the compound word and, in response to such identification, seeking to identify correspondence between a second as yet unidentified portion of the compound word, and a said basic word spelling held in said record.

In the system of the invention, therefore, compound words which are made up of basic words in the record can be checked for correct spelling by repeated reference to the record, so that the need for the record to include such compound words is obviated.

Preferably, a word entered into the system is stored in a register and, in response to correspondence being identified between a basic word held in said record and a said first portion of a said compound word stored in said register, said first portion of said compound word is removed from said register and the second portion of the compound word remaining in the register is investigated for correspondence with a basic word held in said record.

The record of correct spellings may be held in a memory device, an address counter means being operative to sequentially select addresses of said memory device so as to cause respective corect basic word spellings to be output in said predetermined sequence to a spelling checking means (4) which checks the entered word spelling against the sequentially output correct basic word spellings.

The system is preferaby adapted to establish that an entered word spelling is correct if correspondence between said as yet. unidentified part and a said basic word spelling is identified, and that said entered word spelling is incorrect if no such correspondence is identified.

A preferred embodiment of the invention will now be described by way of example with reference to the accompanying drawings, in which:-

FIG. 1 is a block diagram of a word spelling checking system according tò the present invention; and

FIG. 2 is a table showing the typical contents of a memory in the system of Fig. 1.

The principle of checking the word spelling in accordance with the present invention is explained first with reference to some specific examples of basic words and their compounds.

A basic word memory is provided for storing the spellings of a plurality of basic words from which some compound words can be formed. For example, these basic words may include "motor", "boat", "car", "cycle" and the like. This memory should not store the compounds which can be formed by composition using these basic words. For example, these non-stored compounds based on the basic words "boat", "car", and "cycle" may be "motorboat", "motorcar", and "motorcycle". If any of these non-stored compounds is entered as an input word, it is detected that its first five letters "m", "o", "t", "o", and "r" are stored within the memory as a basic word, and that the remaining letters are also stored in this memory. as another basic word.

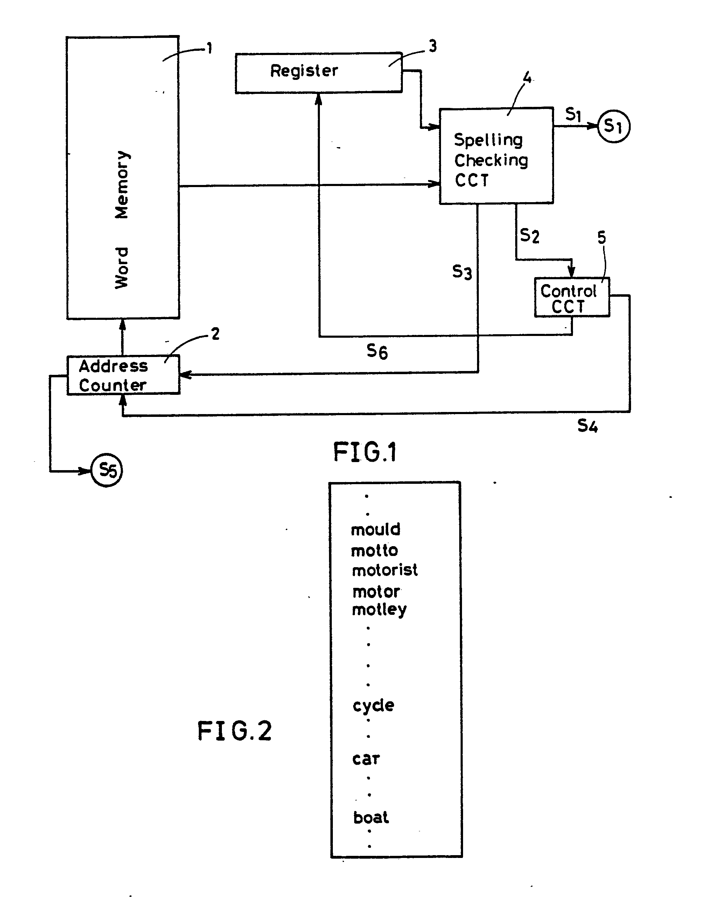

Referring now to FIG. 1, the word spelling checking system comprises a word memory 1, an address counter 2, a register 3, a spelling checking circuit 4, and a control circuit 5. These circuit elements are operated as explained below:

(1) Word Memory 1:

This is provided for storing spellings of a set of basic words. Responsive to address information developed by the address counter 2, it develops a spelling of a word corresponding to the address information. For the sake of convenience of description, it is assumed that in a preferred embodiment of the present invention words to be checked are not inflectional, although it may be possible to modify the system to check inflectional words. This memory 1 develops successive basic words in response to incrementing of the address counter 2 in alphabetical order.

(2) Address Counter 2:

This is provided for advancing the address of the word memory 1. The address counter 2 is responsive to a non-equivalent signal S3 from the spelling checking circuit 4 for counting up. It is responsive to a signal S4 from the control circuit 5 for resetting the counting operation to thereby re-start the counting. When the signal S3 is applied to the address counter 2 for counting up and the counter 2 detects that no relevant words are stored in the word memory 1, the counter 2 develops an error signal S5 indicating that an entered word spelling is incorrect.

(3) Register 3:

This register 3 has a plurality of letter storage stages and stores an entered word for spelling checking in response to the operation of an input means which enters the word. Responsive to a shift signal S6 from the control circuit 5 the register 3 shifts the letters of the entered word stored in the register toward the left by an instructed number of stages, so that some of the first letters of the entered word overflow from the letter storage stages of the register 3.

(4) Spelling Checking Circuit 4:

This is provided for checking the word spellings as developed from the word memory 1 and the register 3. When the word spelling from the word memory 1 is completely equivalent to that from the register 3, the spelling checking circuit 4 develops an equivalent signal S1. When the word from the word memory 1 is not completely equivalent to that from the register 3, but matches the first letters constituting a first portion of the word from the register 3, the spelling checking circuit 4 sends a signal S2 toward the control circuit 5, the signal S2 representing the number of the matched first letters of the word from the word memory 1. Based on this signal S2, the control circuit 5 outputs the shift signal S6 to the register 3 to shift all of the stored letters in the register 3 by a number of stages equivalent to this number. In the other cases, the circuit 4 develops a non-equivalent signal S3.

The spelling checking circuit 4 may comprise a plurality of exclusive OR gates and a single AND gate.

(5) Control Circuit 5:

It is responsive to the signal S2 from the spelling checking circuit 4 for sending to the register 3 the shift number information for shifting the letters. It also develops the signal S4 to reset the address counter 2.

FIG. 2 is a table representative of the typical contents of the word memory 1. The operation of the circuit elements of FIG. 1 will be described with reference to FIG. 2.

(A) It is assumed that a word "Motorist" is entered into the register 3:

The address counter 2 is started in response to a signal (not shown), so that it selects a first address. For example, responsive to the first address of the address counter 2, the word memory 1 develops a first word, for example "zounds". This first word is not equivalent to the spelling of the entered word, and the letters of this first word are not equivalent to the first letters of the entered word. Accordingly, the spelling checking circuit 4 sends the signal S3 toward the address counter 2, so that the count of the address counter 2 is incremented. Such an operation is repeated word-by-word. Eventually, when the word memory 1 develops a word "motorist", the spelling checking circuit 4 generates the signal S1, representing that the inputted word has a correct spelling.

(B) Let us now assume that a word "motorcar" is inputted into the register 3:

The spelling of the inputted word is checked by the spelling checking circuit 4. When the address counter 2 selects a specific address for a word "motor" to the word memory 1, the word memory 1 develops the first word "motor" and the register 3 develops the inputted word "motorcar". Since some letters, five in this instance, of the inputted word "motorcar" are contained in the first letters of the word developed by the word memory 1, the spelling checking circuit 4 generates the signal S2 toward the control circuit 5. Responsive thereto the control circuit 5 sends the signal S6 to the register 3 so that all of the letters in the register 3 are shifted leftwards by the number of the letters "motor", five in this instance. Thus, all of the letters in the register 3 are left shifted and the letters originally in the five first stages are thereby caused to overflow.

The register 3 now contains only letters "car" instead of the previous letters "motorcar". The control circuit 5 resets the address counter 2, so that it restarts its address selection sequence. When the word memory 1 generates a word "car" and then the register 3 outputs the letters "car", the spelling checking circuit 4 develops the equivalent signal S1, representing the confirmation of the correct spelling. If the letters "car" were not stored in the word memory 1, the address counter 2 would reach a count corresponding to the final address. In such a case, the counter 2 outputs the error signal S5, representing that the inputted word is not stored in the word memory 1 meaning that the entered word seems to be incorrectly spelt.

As described above, in accordance with the present invention, it is unnecessary for the memory to store any compound words composed from the stored basic words. The capacity of the memory can thereby be minimized. Although in the above description it is assumed that the language of the words is English, any other languages can be applied. For instance, since German has a great number of compounds, the present invention can be employed usefully. Further, English, German, and the like have many conjugations and inflections. However, since most of the words in these languages are inflected at their ends and the significant letters of each of them are unchanged, the present invention is useful to reduce the required word memory capacity because of the avoidance of the need to store the compound words. For the inflected words, it may be useful for the memory to additionally store the inflected parts.

The word processor proceeds with an operation in response to the detection of the spelling checking circuit 4.

### Claims

1. A system for checking the spelling of words entered into the system wherein the system has a record (1) which includes correct spellings of a set of basic words and excludes a set of compound words each consisting of a plurality of said basic words and checking means (4) for checking an entered word spelling against said basic word spellings in said record (1) in a predetermined sequence so that a said compound word entered into the system is checked by first seeking to identify correspondence between a basic word spelling held in said record and a first portion of the compound word and, in response to such identification, seeking to identify correspondence between a second as yet unidentified portion of the compound word, and a said basic word spelling held in said record.

2. A system according to claim 1 wherein a word entered into the system is stored in a register (3) and, in response to correspondence being identified between a basic word held in said record and a said first portion of a said compound word stored in said register (3), said first portion of said compound word is removed from said register (3) and the second portion of the compound word remaining in the register is investigated for correspondence with a basic word held in said record (1).

3. A system according to claim 2, wherein the register (3) has a set of letter-storage stages, the system further including means (4) for determining the number of letters in said first portion of the compound word for which correspondence with a said basic word in the record (1) is identified and means (5) for shifting the letters of the stored entered word along said stages to cause the letters of said first portion to overflow from the end of the register (3).

4. A system according to any of claims 1 to 3 wherein the record of correct spellings is held in a memory device (1) and wherein an address counter means (2) is operative to sequentially select addresses of said memory device so as to cause respective correct basic word spellings to be output in said predetermined sequence to a spelling checking means (4) which checks the entered word spelling against the sequentially output correct basic word spellings.

5. A system according to any preceding claim, the system being adapted to establish that an entered word spelling is correct if correspondence between said second as yet unidentified portion and a said basic word spelling is identified, and that said entered word spelling is incorrect if no such correspondence is identified.

### Patentansprüche

1. System zur Prüfung der Rechtschreibung von in das System eingegebenen Wörtern, mit einem Speicherdatensatz (1), der einen Satz von Grundwörtern in korrekter Schreibweise umfaßt, jedoch eine Anzahl von aus einer Mehrzahl von Grundwörtern bestehenden zusammengesetzten Wörtern ausschließt, sowie einer Überprüfungseinrichtung (4) zum Vergleich der Schreibweise eines eingegebenen Wortes mit den Schreibweisen der in dem Speicherdatensatz (1) gespeicherten Grundworte in einer bestimmten Reihenfolge, so daß ein in das System eingegebenes, zusammengesetzes Wort in der Weise überprüft wird, daß zuerst versucht wird, Übereinstimmung in der Schreibweise eines in dem Speicherdatensatz gespeicherten Grundwortes mit einem ersten Teil des zusammengesetzen Wortes festzustellen und in Abhängigkeit davon nach der Übereinstimmung zwischen einem zweiten, noch nicht identifizierten Teil des zusammengesetzen Wortes mit der Buchstabierung eines in dem Speicherdatensatz gespeicherten Grundwortes gesucht wird.

2. System nach Anspruch 1, dadurch gekennzeichnet, daß ein in das System eingegebenes Wort in einem Register (3) gespeichert wird und in Abhängigkeit von der festgestellten Übereinstimmung zwischen einem in dem Speicherdatensatz gespeicherten Grundwort und einem ersten, in dem Register (3) gespeicherten Teil des zusammengesetzten Wortes, dieser erste Abschnitt des zusammengesetzten Wortes aus dem Register (3) entfernt wird und der zweite, in dem Register verbleibende Teil des zusammengesetzten Wortes im Hinblick auf eine Übereinstimmung mit einem in dem Speicherdatensatz (1) gespeicherten Grundwort untersucht wird.

3. System nach Anspruch 2, bei dem das Register (3) eine Anzahl von Stufen zur Buchstabenspeicherung sowie weiterhin Einrichtungen (4) aufweist, die zur Bestimmung der Anzahl von Buchstaben des ersten Teiles des zusammengesetzten Wortes dienen, für den Übereinstmmung mit einem in dem Speicherdatensatz (1) gespeicherten Grundwort festgestellt wurde, sowie Einrichtungen (5) zur Verschiebung der Buchstaben des eingegebenen gespeicherten Wortes entlang der Stufen, um die Buchstaben des ersten Teiles am Ende des Registers (3) zu löschen.

4. System nach einem der Ansprüche 1 bis 3, dadurch gekennzeichnet. daß der Speicherdatensatz mit korrekter Buchstabierung in einem Speicher (1) untergebracht ist und daß ein Adresszähler (2) zur sequentiellen Auswahl von Adressen des Speichers vorgesehen ist, so daß entsprechende Grundwort-Buchstabierungen in bestimmter Reihenfolge an die Rechtschreib-überprüfungseinrichtung (4) ausgegeben werden, die die Schreibweise eines eingegebenen Wortes mit den sequentiell ausgegebenen, richtigen Grundwortschreibweisen vergleicht.

5. System nach einem der vorhergehenden Ansprüche, dadurch gekennzeichnet, daß korrekte Schreibweise eines eingegebenen Worts festgestellt wird wenn Übereinstimmung zwischen dem zweiten, noch nicht identifizierten Teil und der Schreibweise eines Grundwortes ermittelt wird, und daß ein eingegebenes Wort als falsch geschrieben identifiziert wird, wenn diese Übereinstimmung nicht festgestellt wird.

**Revendications**

1. Système pour vérifier l'orthographe des mots entrés dans le système, dans lequel le système comporte une mémoire (1) qui contient les orthographes correctes d'un ensemble de mots de base, mais ne contient pas un ensemble de mots composés constitués chacun d'une pluralité desdits mots de base, ainsi qu'un moyen de vérification (4) pour vérifier l'orthographe d'un mot entré par rapport auxdites orthographes des mots de base qui se trouvent dans ladite mémoire (1), selon une séquence prédéterminée de façon qu'un dit mot composé entré dans le système soit vérifié tout d'abord en cherchant à identifier une correspondance entre l'orthographe d'un mot de base contenue dans ladite mémoire et une première portion du mot composé, puis, en réponse à une telle identification, en cherchant à identifier une correspondance entre une seconde portion, encore non identifiée, du mot composé et une dite orthographe de mot de base contenue dans ladite mémoire.

2. Système selon la revendication 1, dans lequel un mot entré dans le système est rangé dans un registre (3) et, en réponse à l'identification, en cours, d'une correspondance entre un mot de base contenu dans ladite mémoire et une dite première portion d'un mot composé rangé dans ledit registre (3), ladite première portion dudit mot composé est enlevée dudit registre (3) et la seconde portion du mot composé, qui reste dans le registre, fait l'objet d'une recherche de correspondance avec un, mot de base contenu dans ladite mémoire (1).

3. Système selon la revendication 2, dans lequel le registre (3) présente un ensemble de positions de mémorisation de lettres, le système comportant en outre un moyen (4) pour déterminer le nombre de lettres qui se trouvent dans ladite première portion du mot composé pour laquelle on a identifié une correspondance avec un dit mot de base qui se trouve dans la mémoire (1), ainsi qu'un moyen (5) pour décaler, du nombre desdites positions, les lettres du mot entré rangé, pour faire en sorte que les lettres de ladite première portion sortent, par débordement, de l'extrémité du registre (3).

4. Système selon l'une quelconque des revendications 1 à 3, dans lequel l'enregistrement des orthographes correctes est contenu dans un dispositif de mémoire (1), et dans lequel un moyen (2) formant compteur d'adresses opère pour sélectionner séquentiellement les adresses dudit dispositif de mémoire pour faire en sorte que les orthographes correctes respectives de mot de base soient envoyées, selon ladite séquence prédéterminée, dans un moyen (4) de vérification de l'orthographe qui vérifie l'orthographe du mot entré par rapport aux orthographes correctes, séquentiellement envoyées, de mot de base.

5. Système selon l'une quelconque des revendications précédentes, le système étant conçu pour établir que l'orthographe d'un mot entré est correcte s'il y a identification d'une correspondance entre ladite seconde portion, encore non identifiée, et une dite orthographe de mot de base; et que ladite orthographe de mot entré est incorrecte s'il n'y a pas identification d'une telle correspondance.

FIG.1

FIG.2